# EUROPEAN PATENT SPECIFICATION

(11) **EP 4 318 153 B1**
(45) Date of publication and mention of the grant of the patent: **03.09.2025**
(21) Application number: 23188794.4
(22) Date of filing: 31.07.2023
(51) Int. Cl.: G05B 19/418, B25J 9/16

(54) **INDUSTRIAL SYSTEM, INDUSTRIAL MACHINE, AND CONTROL METHOD**
INDUSTRIESYSTEM, INDUSTRIEMASCHINE UND STEUERUNGSVERFAHREN
SYSTÈME INDUSTRIEL, MACHINE INDUSTRIELLE ET PROCÉDÉ DE COMMANDE

(30) Priority: 01.08.2022 JP 2022122611
(43) Date of publication of application: 07.02.2024
(73) Proprietor: Kabushiki Kaisha Yaskawa Denki, Kitakyushu-shi, Fukuoka 806-0004 (JP)
(72) Inventor: SHIMODOME, Ryo, Kitakyushu-shi, 8060004 (JP); FUJINO, Kazuo, Kitakyushu-shi, 8060004 (JP); YUBA, Tadasuke, Kitakyushu-shi, 8060004 (JP); MORIWAKA, Ryota, Kitakyushu-shi, 8060004 (JP); KOBAYASHI, Kazutoshi, Kitakyushu-shi, 8060004 (JP); MINAMIDA, Yuki, Kitakyushu-shi, 8060004 (JP); MATAKA, Mikio, Kitakyushu-shi, 8060004 (JP)
(74) Representative: BRP Renaud & Partner mbB Rechtsanwälte Patentanwälte Steuerberater

(56) References cited:
- US-A- 5 777 870
- US-A1- 2013 013 951
- HOSEK M: "Clustered-architecture motion control system utilizing IEEE 1394b communication network", PROCEEDINGS OF AMERICAN CONTROL CONFERENCE, IEEE, PISCATAWAY, NJ, USA, 8 June 2005 (2005-06-08), pages 2939 - 2945, XP010820243, ISBN: 978-0-7803-9098-0, DOI: 10.1109/ACC.2005.1470421

## Description

### TECHNICAL FIELD

The present disclosure relates to an industrial system and a control method.

### BACKGROUND ART

JP 2019-209454 A discloses a system including a robot, a processing device, a robot controller that controls the robot, a processing device controller that controls the processing device, and a programmable logic controller that generates an instruction for the robot controller and the processing device controller.

US 5 777 870 A discloses a brick and tile cutting machine with a supporting stationary bed-frame and a longitudinally-reciprocating carriage mounted on the bed-frame. The brick and tile cutting machine comprises a transversely-reciprocating cutting-frame on the carriage, a shaft journaled on the bed and provided with a crank-arm, a connecting-rod between the crank and the longitudinally-movable carriage, a gear-wheel provided with a hollow hub or clutch member, a clutch member splined on the shaft, and provided with a radially projecting roller, a guide in the path of the roller when rotated by the gear-wheel to separate the clutch members.

### SUMMARY OF INVENTION

### TECHNICAL PROBLEM

A system is provided that is effective for improving reliability of synchronous motions via network communication of a plurality of industrial machines.

### SOLUTION TO PROBLEM

The invention is defined by the system of independent claim 1 and the method of independent claim 11. Optional aspects of the invention are provided by the dependent claims.

### ADVANTAGEOUS EFFECTS OF INVENTION

According to the present disclosure, a system can be provided that is effective for improving reliability of synchronous motions via network communication of a plurality of industrial machines.

### BRIEF DESCRIPTION OF DRAWINGS

FIG. 1 is a schematic diagram illustrating an example of a configuration of an industrial system.
FIG. 2 is a schematic diagram illustrating an example of the industrial system in which a communication failure has occurred.
FIG. 3 is a schematic diagram illustrating an example of a configuration of an industrial machine.
FIG. 4 is a schematic diagram illustrating an example of a configuration of a robot.
FIG. 5 is a block diagram illustrating an example of a configuration of a server.
FIG. 6 is a block diagram illustrating an example of a hardware configuration of the server and a local controller.
FIG. 7 is a flowchart illustrating an example of a control start procedure.
FIG. 8 is a flowchart illustrating an example of a switching procedure of a control mode.
FIG. 9 is a flowchart illustrating an example of a transitioning procedure from an asynchronous mode to a synchronous mode.
FIG. 10 is a flowchart illustrating a modified example of the switching procedure of the control mode.

### DESCRIPTION OF EMBODIMENTS

Hereinafter, an embodiment will be described in detail with reference to the drawings. In the description, elements which are the same or have the same function are given the same reference signs, and redundant descriptions thereof are omitted.

### Industrial System

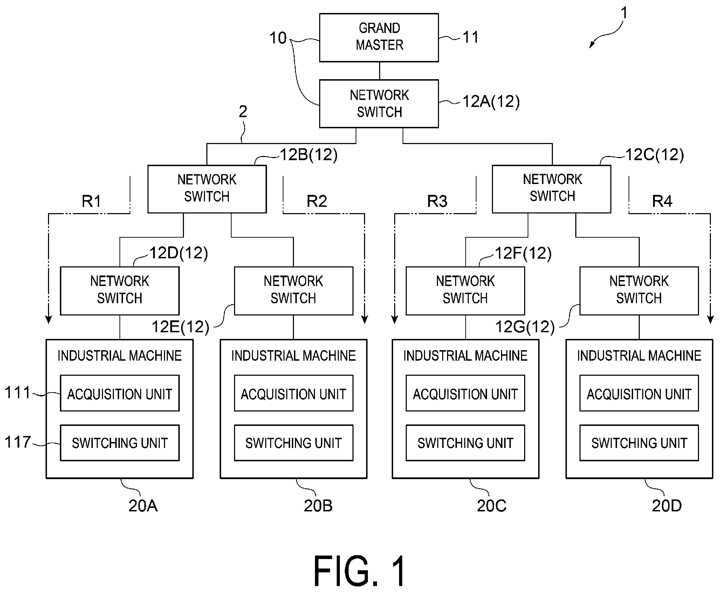

FIG. 1 is a schematic diagram illustrating an example of a configuration of an industrial system. An industrial system 1 illustrated in FIG. 1 includes a plurality of industrial machines 20 connected via a network 2. The plurality of industrial machines 20 communicate with each other via the network 2, and perform a series of motions for the purpose of production of a workpiece and the like. The series of motions includes motions synchronized with each other of at least two or more industrial machines 20. The motions synchronized with each other (hereinafter, referred to as "synchronous motions") include two or more motions performed by each of the two or more industrial machines 20 while maintaining a predetermined mutual relationship of execution timings.

In order for the two or more industrial machines 20 to perform the synchronous motions, the two or more industrial machines 20 need to operate based on pieces of time information synchronized with each other. Thus, in the network 2, a plurality of nodes 10 are time-synchronized, and each of the plurality of industrial machines 20 performs a motion based on a time acquired from the network 2.

The network 2 is, for example, a local area network. In the network 2, the local area network includes a virtual private network (VPN) via a wide area network. The plurality of nodes 10 include devices (e.g., server devices or client devices) interconnected by the network 2. The plurality of nodes 10 also include a network switch that relays between devices.

For example, the plurality of nodes 10 include a grand master 11 and a plurality of network switches 12. The grand master 11 generates a reference time being a target of time synchronization. The plurality of network switches 12 transfer, to the plurality of industrial machines 20, time information representing a time synchronized with the reference time generated by the grand master 11. The time information may include information representing the reference time and information representing a delay time with respect to the reference time. According to the information representing the reference time and the information representing the delay time with respect to the reference time, the time synchronized with the reference time is indirectly represented. For example, the grand master 11 and each of the plurality of network switches 12 transmit and receive the time information while adding a time stamp representing a transmission/reception timing.

One or more network switches 12 are included in a transfer path of the time information from the grand master 11 to each of the plurality of industrial machines 20. Hereinafter, a "higher level" and a "lower level" may be used to indicate a position in a transfer path. For the sake of convenience of description, the terms indicate a positioning when a direction toward the grand master 11 along the transfer path is an upper side and a direction toward the industrial machine 20 along the transfer path is a lower side.

In the example in FIG. 1, the industrial system 1 includes industrial machines 20A, 20B, 20C, and 20D. The plurality of network switches 12 include network switches 12A, 12B, 12C, 12D, 12E, 12F, and 12G. A transfer path R1 from the grand master 11 to the industrial machine 20A includes the network switches 12A, 12B, and 12D. A transfer path R2 from the grand master 11 to the industrial machine 20B includes the network switches 12A, 12B, and 12E. A transfer path R3 from the grand master 11 to the industrial machine 20C includes the network switches 12A, 12C, and 12F. A transfer path R4 from the grand master 11 to the industrial machine 20D includes the network switches 12A, 12C, and 12G. Hereinafter, in each of the transfer paths R1, R2, R3, and R4, a node (the grand master 11 or the network switch 12) located one level higher than the network switch 12 is referred to as an "adjacent master", and a node (the network switch 12 or the industrial machine 20) located one level lower than the network switch 12 is referred to as an "adjacent slave". For example, the grand master 11 is an adjacent master of the network switch 12A, and the network switch 12B is an adjacent slave of the network switch 12A. The network switch 12B is an adjacent master of the network switch 12D, and the industrial machine 20A is an adjacent slave of the network switch 12D.

The time information includes master information about a time master being a generation source of the reference time. The master information includes, for example, identification information about the time master. In FIG. 1, the generation source of the reference time is the grand master 11 in all of the transfer paths R1, R2, R3, and R4. Thus, each of the pieces of time information transferred to the industrial machines 20A, 20B, 20C, and 20D includes, as the master information, information about the grand master 11 (e.g., identification information about the grand master 11).

Each of the plurality of network switches 12 may be a boundary clock. The boundary clock generates a time synchronized with the reference time (regenerates the reference time), based on the time information acquired from an adjacent master and the time stamp described above. The boundary clock transmits the time information including the regenerated reference time to an adjacent slave. According to this configuration, the time information including the reference time regenerated by the lowest network switch 12 in the transfer path is transferred to the industrial machine 20.

The reference time regenerated by the boundary clock is based on the reference time generated by the grand master 11. Thus, a time master of the reference time regenerated by the boundary clock is also the grand master 11.

When the boundary clock is not connected to the grand master 11, the boundary clock generates the reference time. In this case, the boundary clock (network switch 12) that has generated the reference time without being connected to the grand master 11 becomes the time master.

Each of the plurality of network switches 12 may be a transparent clock. The transparent clock transmits, to an adjacent slave, the time information acquired from an adjacent master including a delay time generated by the transparent clock. According to this configuration, the time information including the reference time generated by the grand master 11 and a cumulative delay time generated in the transfer path is transferred to the industrial machine 20.

The network 2 may perform time synchronization using the Precision Time Protocol (PTP). PTP is a time synchronization protocol defined in IEEE Std 1588. In the PTP, the above-described time stamp is provided in a physical layer. It is possible to select whether each node 10 operates only as a master that transmits the time information, operates only as a slave that receives the time information, or operates as both the master and the slave. This choice may change dynamically depending on the configuration of the network 2. For example, the network 2 may perform time synchronization using the Generalized Precision Time Protocol (gPTP, IEEE Std 802.1-AS).

The network 2 may perform time synchronization using the Network Time Protocol (NTP). In the NTP, the above-described time stamp is added in an application layer.

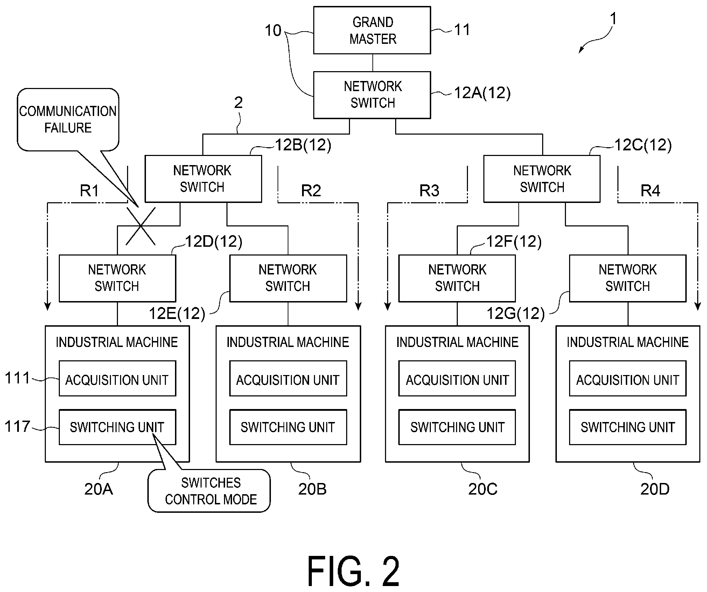

As illustrated above, in the industrial system 1 in which each of the plurality of industrial machines 20 acquires a time from the network 2 in which the plurality of nodes 10 are time-synchronized, it is possible that time masters of times acquired by the two or more industrial machines 20 are different. FIG. 2 illustrates a case where a communication failure has occurred between the network switch 12B and the network switch 12D, and the network switch 12D cannot acquire time information from the network switch 12B. In such a case, a time master of a time acquired by the industrial machines 20B, 20C, and 20D is the grand master 11, whereas a time master of a time acquired by the industrial machine 20A is the network switch 12D.

The network 2 may include two or more grand masters 11. In this case, it is possible that which of the two or more grand masters 11 is a time master differs between the plurality of industrial machines 20. The time master being different may cause a difference in time between the plurality of industrial machines 20. It is possible that the difference in the time between the plurality of industrial machines 20 affects motions performed by the plurality of industrial machines 20 in synchronization with each other.

Thus, at least one of the plurality of industrial machines 20 (first industrial machine) includes an acquisition unit 111 and a switching unit 117. The acquisition unit 111 acquires master information from the network 2. The switching unit 117 switches a control mode indicating a degree of synchronization in accordance with the master information. As illustrated in FIGS. 1 and 2, each of the plurality of industrial machines 20 may include the acquisition unit 111 and the switching unit 117.

The control mode is, for example, a control method of a motion by the industrial machine 20. "The control mode indicates a degree of synchronization" means that the degree of synchronization required for controlling a motion is determined by determining the control mode. "Switching the control mode" means switching the control mode between modes that require different degrees of synchronization.

A configuration in which the control mode is switched in accordance with the master information makes it possible to prevent a failure of a synchronous motion caused by the synchronization deviation in advance by switching the control mode in response to switching of the time master that may cause a synchronization deviation.

In the example in FIG. 2, the industrial machine 20A detects that the time master is switched from the grand master 11 to the network switch 12D based on the master information, and switches the control mode in response to this. For example, the industrial machine 20A switches from a control mode that requires a high degree of time synchronization to a control mode that does not require a high degree of time synchronization. Hereinafter, an example of a configuration of the industrial machine 20 will be illustrated.

### Industrial Machine

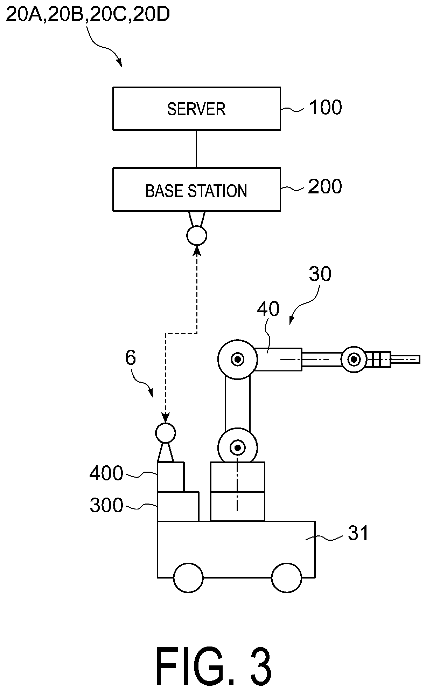

As illustrated in FIG. 3, the industrial machine 20 includes a main body 30, a local controller 300, a server 100, a base station 200, and a communication terminal 400. Hereinafter, the main bodies 30 of the industrial machines 20A, 20B, 20C, and 20D are distinguished from one another as 30A, 30B, 30C, and 30D, as appropriate. The main body 30 is a machine that performs a motion. A type of the main body 30 is not particularly limited.

As an example, the main body 30 illustrated in FIG. 3 is a mobile robot, and performs motions for performing conveyance, processing, assembly, and the like on a workpiece. Specific examples of the motions include a motion in which a component is conveyed and attached to a workpiece, a motion in which a tool such as a screw fastening tool or a welding torch is conveyed and a workpiece is processed, and a motion in which a workpiece itself is conveyed.

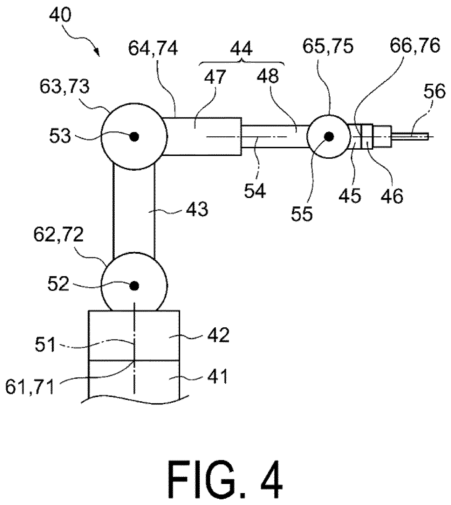

The main body 30 includes an unmanned conveyance vehicle 31 and a robot 40. The unmanned conveyance vehicle 31 moves while supporting the robot 40. The robot 40 is, for example, a vertical articulated type industrial robot. As illustrated in FIG. 4, the robot 40 includes a base portion 41, a swivel portion 42, a first arm 43, a second arm 44, a wrist portion 45, and a tip portion 46. The base portion 41 is installed on the unmanned conveyance vehicle 31. The swivel portion 42 is mounted on the base portion 41 so as to be rotatable around a vertical axis 51. For example, the robot 40 has a joint 61 that attaches the swivel portion 42 to the base portion 41 so as to be rotatable around the axis 51. The first arm 43 is connected to the swivel portion 42 so as to be rotatable around an axis 52 that intersects (e.g., is orthogonal to) the axis 51. For example, the robot 40 has a joint 62 that connects the first arm 43 to the swivel portion 42 so as to be rotatable around the axis 52. The term "intersect" includes in its meaning a twisted relationship such as in so-called grade separation. The same applies hereinafter. The first arm 43 extends from the swivel portion 42 along a direction that intersects (e.g., is orthogonal to) the axis 52.

The second arm 44 is connected to an end portion of the first arm 43 so as to be rotatable around an axis 53 parallel to the axis 52. For example, the robot 40 has a joint 63 that connects the second arm 44 to the first arm 43 so as to be rotatable around the axis 53. The second arm 44 has an arm base portion 47 extending from the end portion of the first arm 43 along a direction that intersects (e.g., is orthogonal to) the axis 53, and an arm end portion 48 further extending from an end portion of the arm base portion 47 along the same direction. The arm end portion 48 is rotatable around an axis 54 with respect to the arm base portion 47. The axis 54 intersects (e.g., is orthogonal to) the axis 53. For example, the robot 40 has a joint 64 that connects the arm end portion 48 to the arm base portion 47 so as to be rotatable around the axis 54.

The wrist portion 45 is connected to an end portion of the arm end portion 48 so as to be rotatable around an axis 55 that intersects (e.g., is orthogonal to) the axis 54. For example, the robot 40 has a joint 65 that connects the wrist portion 45 to the arm end portion 48 so as to be rotatable around the axis 55. The wrist portion 45 extends from the end portion of the arm end portion 48 along a direction that intersects (e.g., is orthogonal to) the axis 55. The tip portion 46 is connected to an end portion of the wrist portion 45 so as to be rotatable around an axis 56 that intersects (e.g., is orthogonal to) the axis 55. For example, the robot 40 has a joint 66 that connects the tip portion 46 to the wrist portion 45 so as to be rotatable around the axis 56. An end effector is provided on the tip portion 46. Specific examples of the end effector include a hand that grips a workpiece, and a work tool that performs processing, assembly, and the like on a workpiece.

Actuators 71, 72, 73, 74, 75, and 76 respectively drive the joints 61, 62, 63, 64, 65, and 66. Each of the actuators 71, 72, 73, 74, 75, and 76 includes, for example, an electric motor and a transmission unit (e.g., a reduction gear) that transmits power of the electric motor to a corresponding one of the joints 61, 62, 63, 64, 65, and 66. For example, the actuator 71 drives the joint 61 so as to rotate the swivel portion 42 around the axis 51. The actuator 72 drives the joint 62 so as to rotate the first arm 43 around the axis 52. The actuator 73 drives the joint 63 so as to rotate the second arm 44 around the axis 53. The actuator 74 drives the joint 64 so as to rotate the arm end portion 48 around the axis 54. The actuator 75 drives the joint 65 so as to rotate the wrist portion 45 around the axis 55. The actuator 76 drives the joint 66 so as to rotate the tip portion 46 around the axis 56.

The main body 30 is not necessarily limited to the mobile robot described above, and may be a robot fixed in a certain position. The main body 30 may be an unmanned conveyance vehicle that performs a motion for conveying a conveyance target object such as a workpiece.

Referring back to FIG. 3, the local controller 300 controls the main body 30. For example, the local controller 300 communicates with the server 100, and controls the main body 30, based on an instruction from the server 100. Hereinafter, the communication performed by the local controller 300 with the server 100 is referred to as "inter-device communication". The local controller 300 may be capable of autonomously performing at least a part of the control of the main body 30 without being based on an instruction from the server 100. In this case, the local controller 300 controls the main body 30 based on, for example, an operation program stored in the local controller 300. The operation program includes a plurality of operation commands in time series. Each of the plurality of operation commands includes an operation target position and an operation target speed of the main body 30. An example of the operation target position of the main body 30 includes an operation target position of the tip portion 46. The operation target orientation of the tip portion 46 includes an operation target orientation of the tip portion 46.

The server 100 communicates with the local controller 300 by the inter-device communication described above, and controls the main body 30 via the local controller 300. For example, the server 100 causes the main body 30 to perform a synchronous motion with the main body 30 of another industrial machine 20. For example, a server 100A in the industrial machine 20A causes a main body 30A to perform a synchronous motion with main bodies 30B, 30C, and 30D. Specific examples of such a synchronous motion include the following. Example 1) The main body 30A and at least one of the main bodies 30B, 30C, and 30D cooperate to hold and convey the same workpiece. Example 2) The main body 30A performs a motion such as processing and assembly on a workpiece held and conveyed by at least any of the main bodies 30B, 30C, and 30D.

In Example 1 described above, the motion of the main body 30A needs to be synchronized with the motion of at least one of the main bodies 30B, 30C, and 30D such that the tip portion 46 of the main body 30A has a predetermined position and orientation with respect to the tip portion 46 of at least one of the main bodies 30B, 30C, and 30D. In Example 2 described above, the motion of the main body 30A needs to be synchronized with the motion of at least one of the main bodies 30B, 30C, and 30D such that the tip portion 46 of the main body 30A has a predetermined position and orientation with respect to a workpiece held and conveyed by the tip portion 46 of at least one of the main bodies 30B, 30C, and 30D.

The base station 200 is connected to the server 100, and the communication terminal 400 is connected to the base station 200. The base station 200 and the communication terminal 400 perform wireless communication for the inter-device communication described above. For example, the base station 200 and the communication terminal 400 perform mobile communication. The mobile communication may be communication by a fifth generation mobile communication system (5G communication).

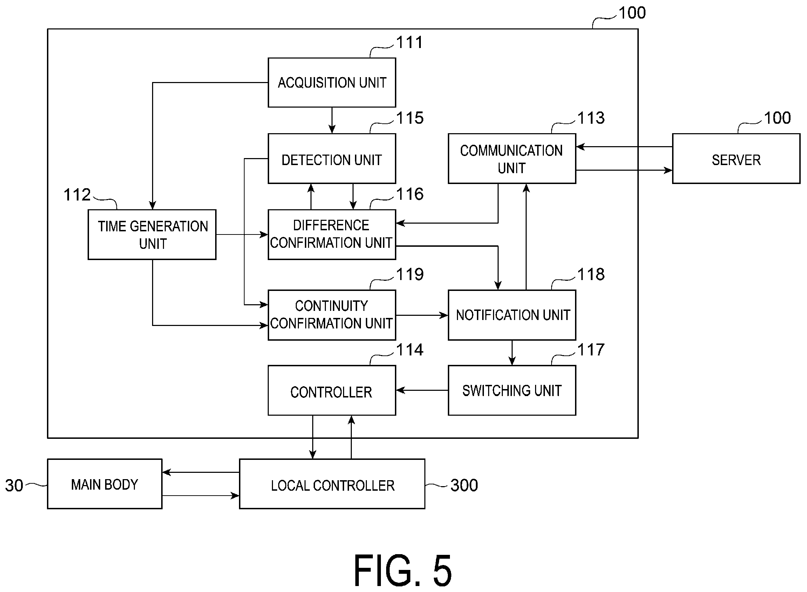

As illustrated in FIG. 5, the server 100 includes, as functional components (hereinafter referred to as "functional blocks"), the acquisition unit 111, a time generation unit 112, a communication unit 113, a controller 114, a detection unit 115, a difference confirmation unit 116, the switching unit 117, and a notification unit 118. The acquisition unit 111 acquires the above-described time information from the network 2. For example, the acquisition unit 111 acquires the above-described time information from the network switch 12.

The time generation unit 112 generates a time synchronized with the reference time, based on the time information acquired by the acquisition unit 111. As described above, when the network switch 12 is a boundary clock, the time information acquired by the acquisition unit 111 includes a reference time regenerated by the network switch 12 one level higher than the industrial machine 20. The time generation unit 112 generates a time synchronized with the reference time, based on the reference time regenerated by the network switch 12.

As described above, when the network switch 12 is a transparent clock, the time information acquired by the acquisition unit 111 includes a reference time generated by the grand master 11 and a cumulative delay time. The time generation unit 112 generates a time synchronized with the reference time, based on the reference time generated by the grand master 11 and the cumulative delay time.

Hereinafter, the time generated by the time generation unit 112 is referred to as a "generated time". The generated time is included in the time acquired by the server 100.

The communication unit 113 performs inter-server communication with the server 100 of another industrial machine 20 via the network 2. The communication unit 113 transmits and receives a progress of a synchronous motion by the main body 30 and the like to and from the server 100 of the other industrial machine 20 through the inter-server communication. The communication unit 113, through the inter-server communication, transmits the generated time to the server 100 of the other industrial machine 20 and receives a generated time of the server 100 of the other industrial machine 20 from the server 100 of the other industrial machine 20. Hereinafter, the generated time of the server 100 of the other industrial machine 20 is referred to as a "comparison target time".

The controller 114 communicates with the local controller 300 through the inter-device communication described above, and controls the main body 30 via the local controller 300. The controller 114 causes the main body 30 to perform a motion in a predetermined control mode. The motion that the controller 114 causes the main body 30 to perform includes the synchronous motion described above.

For example, the controller 114 causes the main body 30 to perform the synchronous motion at a predetermined timing, based on the generated time. The synchronous motions are performed due to two or more main bodies 30 performing a motion at a predetermined timing based on times synchronized with each other.

The controller 114 is capable of controlling the main body 30 in a plurality of types of control modes. The plurality of types of control modes may include two or more control modes having synchronization levels different from each other. The synchronization level is a synchronization level required between the main body 30 and the other industrial machine 20 in order to cause the main body 30 to perform a motion without any trouble. The synchronization level indicates, for example, a magnitude of a difference between the generated time and the comparison target time is. A high synchronization level indicates that a difference between the generated time and the comparison target time is small. A low synchronization level indicates that a difference between the generated time and the comparison target time is large.

In all of the control modes, the controller 114 controls the main body 30 based on a predetermined operation program. Similar to the above-described operation program, the operation program here also includes a plurality of operation commands in time series.

The controller 114 may repeatedly execute, in a predetermined control cycle, receiving feedback information indicating a state of the main body 30 from the local controller 300, generating a control instruction based on the feedback information such that the main body 30 follows an operation command, and transmitting the control instruction to the local controller 300. In this case, the local controller 300 repeats, in the control cycle, transmitting the feedback information to the server 100, receiving the control instruction from the server 100, and operating the main body 30 based on the received control instruction.

The controller 114 may perform synchronous communication based on the generated time. The synchronous communication is communication in which transmission and reception of a predetermined data set are repeated in a fixed communication cycle. For example, the controller 114 may perform the synchronous communication with the controller 114 of another server 100 (hereinafter referred to as "another controller 114"). As an example, the controller 114 repeats, in a communication cycle, transmitting a first data set to the other controller 114, and receiving a second data set from the other controller 114.

After the controller 114 transmits the first data set, a variation in time until the other controller 114 receives the first data set may occur. Similarly, after the other controller 114 transmits the second data set, a variation in time until the controller 114 receives the second data set may occur. In order to suppress this variation, the controller 114 may, based on the generated time, add first communication cycle information designating a communication cycle in which the first data set is to be read and transmit the first data set to the other controller 114. In this case, the other controller 114 stores the received first data set in advance until the communication cycle designated by the first communication cycle information, and reads the first data set in the communication cycle. Similarly, the other controller 114 may, based on the generated time, add second communication cycle information designating a communication cycle in which the second data set is to be read and transmit the second data set to the controller 114. In this case, the controller 114 stores the received second data set in advance until the communication cycle designated by the second communication cycle information, and reads the second data set in the communication cycle.

In this manner, each of the controller 114 and the other controller 114 performs the processing of suppressing a variation in the transmission/reception timing of the first data set and the second data set, based on times synchronized with each other, and thus the synchronous communication can be performed with high reliability.

The controller 114 may perform the synchronous communication with the local controller 300. For example, the controller 114 may add first control cycle information designating a control cycle in which a control instruction is to be read and transmit the control instruction to the local controller 300. In this case, the local controller 300 stores the received control instruction in advance until the control cycle designated by the first control cycle information, reads the control instruction in the control cycle, and controls the main body 30, based on the read control instruction. Similarly, the local controller 300 may add second control cycle information designating a control cycle in which feedback information needs to be read and transmits the feedback information to the server 100. In this case, the communication unit 113 stores the feedback information until the control cycle designated by the second control cycle information. The controller 114 reads the feedback information in the control cycle designated by the second control cycle information, and generates a control instruction based on the read feedback information. As a result, influence, on a motion of the main body 30, of a variation in the transmission/reception timing of the feedback information and the control instruction is suppressed.

In this manner, each of the industrial machines 20 performs, based on a time synchronized with the reference time, the control for suppressing the influence of the variation in the transmission/reception timing of the feedback information and the control instruction on the motion of the main body 30, and thus the reliability of the synchronous motion by the main body 30 can be further improved.

The detection unit 115 detects switching of a time master, based on master information (hereinafter, referred to as "master information acquired by the acquisition unit 111") included in the time information acquired by the acquisition unit 111. For example, the detection unit 115 stores the master information acquired by the acquisition unit 111 at a predetermined timing as "reference master information", and compares the master information subsequently acquired by the acquisition unit 111 with the reference master information to detect the switching of the time master.

When the switching of the time master is detected by the detection unit 115, the difference confirmation unit 116 confirms a difference between the generated time described above and the comparison target time described above.

The difference confirmation unit 116 may confirm a difference between the generated time and the comparison target time even before the switching of the time master is detected by the detection unit 115. For example, the difference confirmation unit 116 may confirm whether there is a difference between the generated time and the comparison target time before the server 100 causes the main body 30 to perform the synchronous motion. In this case, the detection unit 115 may store the reference master information described above at a timing in which the difference confirmation unit 116 confirms that there is no difference between the generated time and the comparison target time.

Note that "there is no difference" is not necessarily limited to a case where the difference is 0, and includes a case where there is a difference to an extent that there is no problem with the synchronous motion. The same applies hereinafter. The difference confirmation unit 116 may determine whether there is a difference between the generated time and the comparison target time based on whether a time master at the generated time is the same as a time master at the comparison target time, instead of comparing the generated time and the comparison target time. For example, the difference confirmation unit 116 may determine that there is no difference when the time master at the generated time and the time master at the comparison target time are the same. In this case, the communication unit 113 may receive information about the time master at the comparison target time from the server 100 of the other industrial machine 20.

The difference confirmation unit 116 may determine whether there is a difference between the generated time and the comparison target time based on continuity of the generated time, instead of comparing the generated time and the comparison target time. For example, every time a generated time is generated, the difference confirmation unit 116 compares a difference between the generated time and a preceding generated time (hereinafter, referred to as a "time difference") with an elapsed time from a generation timing of the preceding generated time. When there is no difference between the time difference and the elapsed time, the difference confirmation unit 116 determines that there is continuity of the generated time, and when there is a difference between the time difference and the elapsed time, the difference confirmation unit 116 determines that there is no continuity of the generated time. When the difference confirmation unit 116 determines that there is no continuity of the generated time, the difference confirmation unit 116 may assume that a difference has occurred between the generated time and the comparison target time. Note that the absence of continuity of the generated time does not necessarily mean that a difference has occurred between the generated time and the comparison target time, but it is possible to assume to some extent that a difference has occurred due to the absence of continuity. For example, in a situation where the generated time and the comparison target time are synchronized with each other, a difference occurs between the generated time and the comparison target time when the continuity of the comparison target time is maintained and the continuity of the generated time is lost. According to the configuration in which the occurrence of a difference is assumed based on continuity, it is possible to assume the occurrence of a difference between the generated time and the comparison target time even when the communication unit 113 does not receive the comparison target time from the server 100 of the other industrial machine 20.

The switching unit 117 switches the control mode of the main body 30 by the controller 114 in accordance with the master information. When the control mode is switched by the switching unit 117, the controller 114 controls the main body 30 in the control mode that was switched to.

For example, the plurality of types of control modes described above may include a synchronous mode in which two or more industrial machines 20 are synchronized (two or more industrial machines 20 are caused to perform synchronous motions), and a safety mode with a lower synchronization level than the synchronous mode. In this case, when the switching of the time master is detected while the controller 114 controls the main body 30 in the synchronous mode, the switching unit 117 may switch the control mode from the synchronous mode to the safety mode.

The switching unit 117 may switch from the synchronous mode to the safety mode in at least a part of cases where the switching of the time master is detected. For example, the switching unit 117 may switch from the synchronous mode to the safety mode when a difference is confirmed by the difference confirmation unit 116 among the cases where switching of the time master is detected.

The safety mode may be a mode with a lower synchronization level than at least the synchronous mode. Examples of the safety mode include the following. Example 2-1) The main body 30 is caused to continue the synchronous motion at a reduced speed as compared to during execution of the synchronous mode. Example 2-2) The main body 30 is caused to perform a motion (hereinafter referred to as an "asynchronous motion") that is not synchronized with the main body 30 of the other industrial machine 20. Example 2-3) The main body 30 is stopped and the stopped state is maintained. Example 2-4) The main body 30 is stopped and returned to an initial state before a start of the synchronous motion.

According to Example 2-1, after the switching unit 117 switches from the synchronous mode to the safety mode, the controller 114 reduces the speed and causes the main body 30 to continue the synchronous motion. According to Example 2-2, after the switching unit 117 switches from the synchronous mode to the safety mode, the controller 114 causes the main body 30 to stop the synchronous motion and causes the main body 30 to perform the asynchronous motion. According to Example 2-3, after the switching unit 117 switches from the synchronous mode to the safety mode, the controller 114 causes the main body 30 to stop the synchronous motion. According to Example 2-4, after the switching unit 117 switches from the synchronous mode to the safety mode, the controller 114 causes the main body 30 to stop the synchronous motion and causes the main body 30 to return to the initial state before the start of the synchronous motion.

The plurality of types of control modes may include two or more safety modes with different synchronization levels. For example, the two or more safety modes include a first safety mode, and a second safety mode with a lower synchronization level than the first safety mode. In this case, when the difference confirmation unit 116 determines that there is a difference, the difference confirmation unit 116 may further determine a magnitude of the difference. The switching unit 117 may switch from the synchronous mode to the first safety mode when the difference is smaller than a predetermined level, and may switch from the synchronous mode to the second safety mode when the difference is greater than the predetermined level. When the first safety mode is Example 2-1 described above, Examples 2-2 to 2-4 described above and the like may be the second safety mode.

When the switching unit 117 switches the control mode from the synchronous mode to the safety mode, the notification unit 118 notifies the other industrial machine 20 (second industrial machine). For example, the notification unit 118 causes the communication unit 113 to transmit notification contents to the other industrial machine 20. The notification contents for the other industrial machine 20 may be, for example, an advance notice of switching the control mode from the synchronous mode to the safety mode, or an after-the-fact notice of switching the control mode from the synchronous mode to the safety mode.

The notification contents may be information serving as a trigger for the switching unit 117 to switch the control mode from the synchronous mode to the safety mode. Examples of the information serving as the trigger include detection of the switching of the time master by the detection unit 115, and confirmation of a difference by the difference confirmation unit 116. The notification unit 118 may acquire the information serving as the trigger from the detection unit 115, the difference confirmation unit 116, or the like, and may notify both the switching unit 117 and the other industrial machine 20 of the information. In this case, the switching unit 117 switches the control mode based on the notification from the notification unit 118.

In the other industrial machine 20, the notification described above is received by the communication unit 113. When the communication unit 113 receives the notification described above, the switching unit 117 of the other industrial machine 20 switches the control mode in the other industrial machine 20 from the synchronous mode to the safety mode.

The plurality of types of control modes may include an asynchronous mode in which the two or more industrial machines 20 are not synchronized with each other and a synchronous mode in which the two or more industrial machines 20 are synchronized with each other, and the controller 114 may control the main body 30 in the synchronous mode after controlling the main body 30 in the asynchronous mode.

In this case, when the switching of the time master is detected by the detection unit 115 during a period in which the control mode is the asynchronous mode, the difference confirmation unit 116 may confirm whether a difference has occurred between the generated time and the comparison target time. When the difference confirmation unit 116 confirms that no difference has occurred, the switching unit 117 switches the control mode from the asynchronous mode to the synchronous mode. When the difference confirmation unit 116 confirms that a difference has occurred, the switching unit 117 stops the switching from the asynchronous mode to the synchronous mode.

The communication unit 113 may receive the notification described above from the notification unit 118 of the other industrial machine 20. In this case, the switching unit 117 switches the control mode from the synchronous mode to the safety mode. The difference confirmation unit 116 may confirm the difference described above prior to the switching of the control mode by the switching unit 117. The switching unit 117 may switch from the synchronous mode to the safety mode when a difference has been confirmed by the difference confirmation unit 116 among cases where the communication unit 113 receives the notification contents described above.

The server 100 may further include a continuity confirmation unit 119. When the switching of the time master is detected by the detection unit 115, the continuity confirmation unit 119 confirms that a time before and a time after the switching of the time master are continuous (continuity of the generated time described above). When the continuity cannot be confirmed by the continuity confirmation unit 119, the switching unit 117 may switch the control mode from the synchronous mode to the safety mode.

In this manner, discontinuity of the time triggers the switching of the control mode from the synchronous mode to the safety mode. The notification contents described above from the notification unit 118 to the other industrial machine 20 may be discontinuous in time. The notification unit 118 may acquire an occurrence of the discontinuity in time from the continuity confirmation unit 119 and notify both the switching unit 117 and the other industrial machine 20 of the occurrence of the discontinuity in time. In this case, the switching unit 117 switches the control mode based on the notification from the notification unit 118.

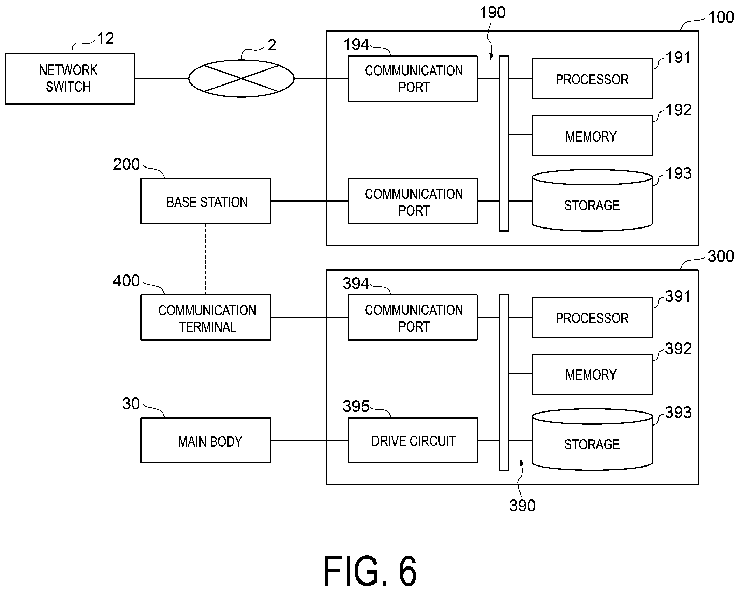

FIG. 6 is a block diagram illustrating an example of a hardware configuration of the server 100 and the local controller 300. As illustrated in FIG. 6, the server 100 includes a circuit 190. The circuit 190 includes a processor 191, a memory 192, a storage 193, a communication port 194, and a communication port 195.

The storage 193 is a non-volatile storage medium. Specific examples of the storage 193 include a hard disk and a flash memory. The storage 193 may be a portable storage medium such as an optical disk. The storage 193 stores a program for causing the server 100 to acquire master information from the network 2 and switch the control mode in accordance with the master information. For example, the storage 193 stores a program for causing the server 100 to configure each of the above functional blocks.

The memory 192 is, for example, a temporary storage medium such as a random access memory, and temporarily stores the program loaded from the storage 193. The processor 191 includes one or more arithmetic elements, and configures each of the above functional blocks in the server 100 by executing the program loaded into the memory 192. The communication port 194 performs the inter-server communication with the other industrial machine 20 via the network 2 in response to a request from the processor 191. The communication port 195 performs inter-device communication with the local controller 300 via the base station 200 and the communication terminal 400 in response to a request from the processor 191.

The local controller 300 includes a circuit 390. The circuit 390 includes a processor 391, a memory 392, a storage 393, a communication port 394, and a drive circuit 395.

The storage 393 is a non-volatile storage medium. Specific examples of the storage 393 include a hard disk and a flash memory. The storage 393 may be a portable storage medium such as an optical disk. The storage 393 stores a program for controlling the main body 30.

The memory 392 is, for example, a temporary storage medium such as a random access memory, and temporarily stores the program loaded from the storage 393. The processor 391 includes one or more arithmetic elements, and controls the main body 30 by executing the program loaded into the memory 392. The communication port 394 performs the inter-device communication with the server 100 via the communication terminal 400 and the base station 200 in response to a request from the processor 391. The drive circuit 395 supplies drive power to the main body 30 in response to a request from the processor 391.

The configuration described above is merely an example, and can be modified as appropriate. For example, the industrial machine 20 may perform the inter-device communication between the server 100 and the local controller 300 through wired communication. The server 100 and the local controller 300 may be integrated into one device. The servers 100 of two or more industrial machines 20 may be integrated into a server device of the industrial system 1. In this case, the servers 100 of the two or more industrial machines 20 are implemented by software in the server device of the industrial system 1.

### Control Procedure

Hereinafter, an example of a control procedure executed by the industrial machine 20 will be illustrated. The control procedure includes performing a motion synchronized with another motion in the other industrial machine 20 based on a time acquired from the network 2, acquiring master information, and switching a control mode according to the master information. Hereinafter, the control procedure will be divided into a control start procedure and a control mode change procedure.

### Control Start Procedure

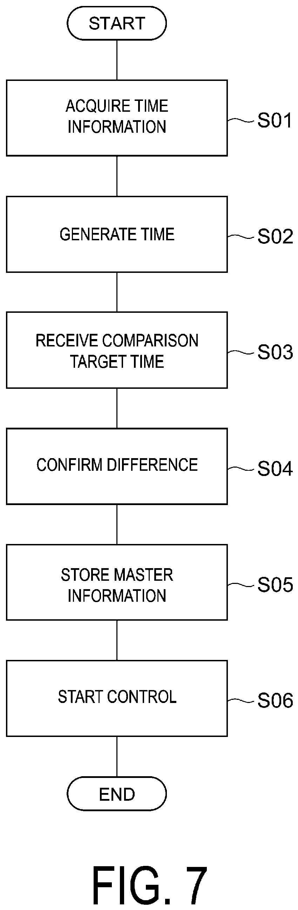

As illustrated in FIG. 7, the server 100 first executes steps S01 and S02. In step S01, the acquisition unit 111 acquires time information from the network 2. In step S02, the time generation unit 112 generates a time synchronized with a reference time based on the time information. The time generated in step S02 is the generated time described above.

Subsequently, the server 100 executes steps S03 and S04. In step S03, the communication unit 113 receives the comparison target time described above from the server 100 of the other industrial machine 20. In step S04, the difference confirmation unit 116 confirms that there is no difference between the generated time and the comparison target time.

Subsequently, the server 100 executes steps S05 and S06. In step S05, the detection unit 115 stores master information as reference master information. In step S06, the controller 114 starts control of the main body 30 based on the generated time. This completes the control start procedure.

### Control Mode Change Procedure

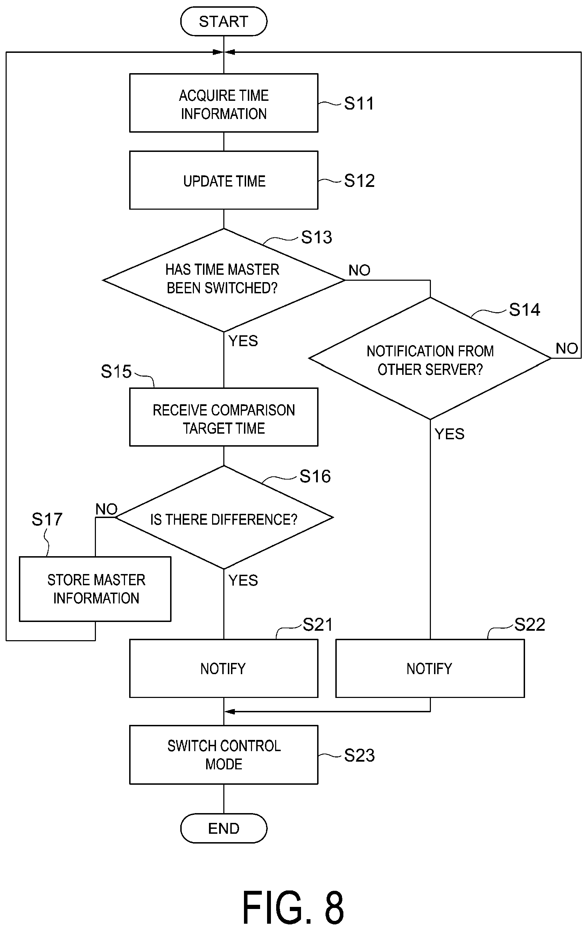

The control mode change procedure is executed after the control start procedure described above. As illustrated in FIG. 8, the server 100 first executes steps S11 and S12. In step S11, the acquisition unit 111 acquires the time information from the network 2. In step S12, the time generation unit 112 updates the generated time based on the time information.

Subsequently, the server 100 executes step S13. In step S13, the detection unit 115 compares master information included in the time information acquired in step S11 with the reference master information to confirm whether a time master has been switched. In step S13, when it is determined that the time master has not been switched, the server 100 executes step S14. In step S14, the notification unit 118 confirms whether the communication unit 113 has received a notification that a difference has been confirmed. In step S14, when it is determined that the notification that the difference has been confirmed has not been received, the server 100 returns the processing to step S11.

In step S13, when it is determined that the time master has been switched, the server 100 executes steps S15 and S16. In step S15, the communication unit 113 receives the comparison target time described above from the server 100 of the other industrial machine 20. In step S16, the difference confirmation unit 116 confirms a difference between the generated time and the comparison target time. In step S16, when it is determined that there is no difference, the server 100 executes step S17. In step S17, the detection unit 115 stores the master information after switching as reference master information. Subsequently, the server 100 returns the processing to step S11.

In step S16, when it is determined that there is a difference, the server 100 executes step S21. In step S21, the notification unit 118 notifies the switching unit 117 and the server 100 of the other industrial machine 20 that there is a difference. In step S14, when it is determined that the communication unit 113 has received the notification described above, the server 100 executes step S22. In step S22, the notification unit 118 notifies the switching unit 117 that the notification has been received.

Subsequently, the server 100 executes step S23. In step S23, the switching unit 117 switches the control mode based on the notification in step S21 or step S22. The controller 114 stops control of the main body 30 in the control mode before switching, and controls the main body 30 in the control mode after switching. This completes the control mode switching procedure. Note that in the above-described procedure, a case has been described as an example where the notification unit 118 notifies, as notification contents, that the difference confirmation unit 116 has confirmed a difference, but the notification contents are not limited thereto as described above. The procedure described above can be changed as appropriate depending on a difference in the notification contents and the like.

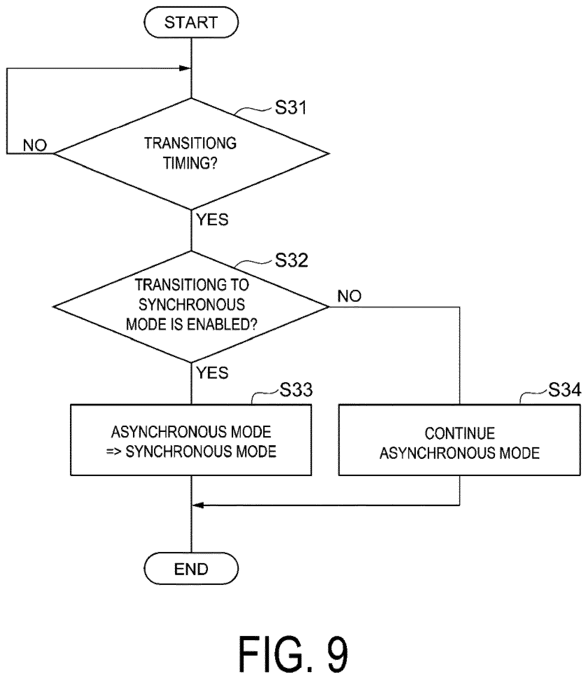

The procedure described above may be executed while the main body 30 is being controlled in the asynchronous mode. In this case, the switching unit 117 switches, in advance during the asynchronous mode, to the control mode that normally comes after the execution of the asynchronous mode. For example, the switching unit 117 switches whether transitioning, to the synchronous mode that normally comes after the execution of the asynchronous mode, is enabled. FIG. 9 is a flowchart illustrating an example of a control procedure executed by the server 100 after the execution of the asynchronous mode, based on a switching result of whether the transitioning is enabled.

As illustrated in FIG. 9, the server 100 first executes steps S31 and S32. In step S31, the controller 114 waits for a timing to transition from the asynchronous mode to the synchronous mode. In step S32, the switching unit 117 confirms the determination result of whether transitioning to the synchronous mode is enabled. In step S32, when it is determined that transitioning to the synchronous mode is enabled, the server 100 executes step S33. In step S33, the switching unit 117 causes the control mode to transition from the asynchronous mode to the synchronous mode. The controller 114 starts control of the main body 30 in the synchronous mode. In step S32, when it is determined that transitioning to the synchronous mode is disabled, the server 100 executes step S34. In step S34, the switching unit 117 does not cause the control mode to transition from the asynchronous mode to the synchronous mode. The controller 114 continues control of the main body 30 in the asynchronous mode. As described above, a switching result of the control mode performed in advance during the execution of the asynchronous mode is reflected in the control after the execution of the asynchronous mode.

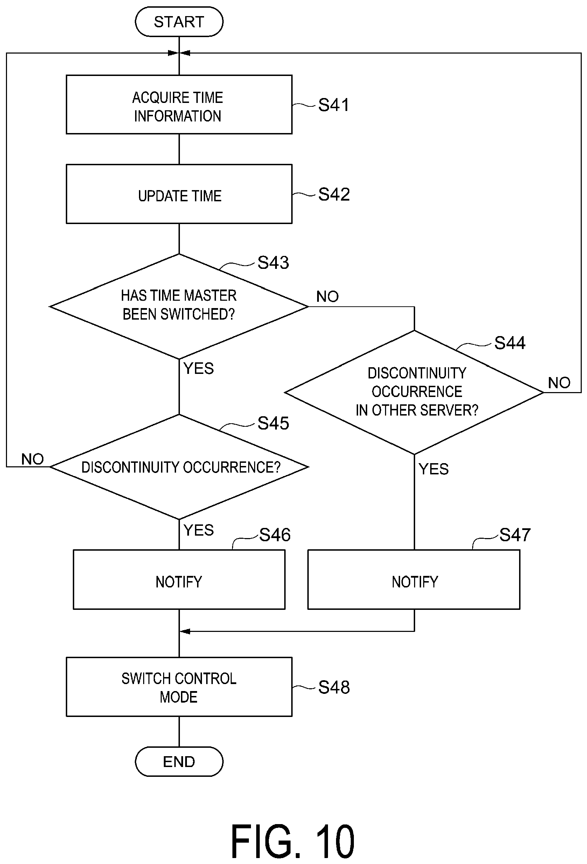

As described above, the server 100 may further include the continuity confirmation unit 119. FIG. 10 illustrates an example of a switching procedure of a control mode when the continuity confirmation unit 119 is included. As illustrated in FIG. 10, the server 100 executes steps S41, S42, and S43 similarly to steps S11, S12, and S13. In step S41, the acquisition unit 111 acquires the time information from the network 2. In step S42, the time generation unit 112 updates the generated time based on the time information. In step S43, the detection unit 115 confirms whether a time master has been switched.

In step S43, when it is determined that the time master has not been switched, the server 100 executes step S44. In step S44, the notification unit 118 confirms whether the communication unit 113 has received a notification of an occurrence of discontinuity. In step S44, when it is determined that the communication unit 113 has not received the notification of the occurrence of the discontinuity, the server 100 returns the processing to step S41.

In step S43, when it is determined that the time master has been switched, the server 100 executes step S45. In step S45, the continuity confirmation unit 119 confirms whether the discontinuity occurs in a time before and a time after the switching of the time master.

In step S45, when it is determined that the discontinuity has occurred, the server 100 executes step S46. In step S46, the notification unit 118 notifies the switching unit 117 and the server 100 of the other industrial machine 20 that the discontinuity has occurred. In step S44, when it is determined that the communication unit 113 has received the notification of the occurrence of the discontinuity, the server 100 executes step S47. In step S47, the notification unit 118 notifies the switching unit 117 that the notification has been received.

Subsequently, the server 100 executes step S48. In step S48, the switching unit 117 switches the control mode based on the notification in step S46 or step S47. This completes the control mode switching procedure.

### REFERENCE SIGNS LIST

1 Industrial system
10 Node
2 Network
20 Industrial machine
111 Acquisition unit
115 Detection unit
116 Difference confirmation unit
117 Switching unit
118 Notification unit
119 Continuity confirmation unit

## Claims

1. An industrial system(1), comprising:
a network(2) and two or more industrial machines(20) connected via the network (2), wherein the industrial machines (20) are configured to perform motions synchronized with each other by performing the motions based on a time acquired from the network(2) in which a plurality of nodes(10) are time-synchronized, the plurality of nodes (10) including devices interconnected by the network (2), wherein
a first industrial machine(20) included in the two or more industrial machines(20) includes:
an acquisition unit(111) configured to acquire master information about a time master being a generation source of the time;
a switching unit(117) configured to switch a control mode indicating a degree of the synchronization in accordance with the master information; and
a detection unit(115) configured to detect switching of the time master based on the master information acquired by the acquisition unit(111); wherein
the switching unit(117) is further configured to switch, when the switching of the time master is detected, the control mode from a synchronous mode in which the two or more industrial machines(20) are synchronized to a safety mode in which a difference between a time acquired by a second industrial machine(20) included in the two or more industrial machines(20) and a time acquired by the first industrial machine(20) is larger than that in the synchronous mode.

2. The industrial system(1) according to claim 1, wherein
the first industrial machine(20) further includes a difference confirmation unit(116) configured to confirm, when the switching of the time master is detected, the difference between the time acquired by the second industrial machine(20) and the time acquired by the first industrial machine(20), and
the switching unit(117) is further configured to switch, when a difference is confirmed by the difference confirmation unit(116), from the synchronous mode to the safety mode.

3. The industrial system(1) according to claim 1 or 2, wherein
the first industrial machine(20) further includes a notification unit(118) configured to notify, when the switching unit(117) switches the control mode from the synchronous mode to the safety mode, a second industrial machine(20) included in the two or more industrial machines(20), and
the second industrial machine(20) includes a switching unit(117) configured to switch, when the second industrial machine(20) acquires the notification, a control mode in the second industrial machine(20) from the synchronous mode to the safety mode.

4. The industrial system(1) according to any one of claims 1 to 3, wherein the first industrial machine(20) is further configured to continue, in the safety mode, the motions synchronized with each other at a reduced speed.

5. The industrial system(1) according to any one of claims 1 to 4, wherein the first industrial machine(20) is further configured to perform, in the safety mode, motions in which the two or more industrial machines(20) are not synchronized with each other different from the motions synchronized with each other.

6. The industrial system(1) according to any one of claims 2 to 5, wherein
the difference confirmation unit(116) is further configured to confirm a magnitude of the difference, and
the first industrial machine(20) is further configured to, in the safety mode:
continue the motions synchronized with each other at a reduced speed when the difference is smaller than a predetermined level; and
perform motions that are not synchronized with each other or stops motions being executed when the difference is greater than the predetermined level.

7. The industrial system(1) according to any one of claims 1 to 6, wherein
the control mode includes:
an asynchronous mode in which the two or more industrial machines(20) are not synchronized with each other; and
a synchronous mode in which the two or more industrial machines(20) are synchronized with each other performed after the asynchronous mode,
the first industrial machine(20) further includes a difference confirmation unit(116) configured to confirm, when the switching of the time master is detected by the detection unit(115) during a period in which the control mode is the asynchronous mode, whether a difference has occurred between a time acquired by a second industrial machine(20) included in the two or more industrial machines(20) and a time acquired by the first industrial machine(20), and
the switching unit(117) is further configured to switch, when the difference confirmation unit(116) confirms that no difference has occurred, the control mode from the asynchronous mode to the synchronous mode.

8. The industrial system(1) according to any one of claims 1 to 7, wherein
the first industrial machine(20) further includes a continuity confirmation unit(119) configured to confirm, when the switching of the time master is detected by the detection unit(115), continuity of a time before and a time after the switching of the time master, and
the switching unit(117) is further configured to switch, when the continuity confirmation unit(119) cannot confirm the continuity, the control mode from the synchronous mode to the safety mode.

9. The industrial system(1) according to any one of claims 1 to 8, wherein
the plurality of nodes(10) include a boundary clock, and
the acquisition unit(111) is further configured to acquire the time and the master information from the boundary clock.

10. The industrial system(1) according to any one of claims 1 to 9, wherein the first industrial machine(20) is further configured to perform synchronous communication based on a time acquired from a network(2).

11. A method for controlling the industrial system of claim 1, the method comprising:
performing a motion synchronized with another motion in another industrial machine(20) based on a time acquired from the network(2) in which a plurality of nodes(10) are time-synchronized;
acquiring master information about a time master being a generation source of the time;
detecting switching of the time master based on the master information;
switching a control mode indicating a degree of the synchronization in accordance with the master information; wherein
when the switching of the time master is detected, the control mode is switched from a synchronous mode in which the two or more industrial machines(20) are synchronized to a safety mode in which a difference between a time acquired by a second industrial machine(20) included in the two or more industrial machines(20) and a time acquired by the first industrial machine(20) is larger than that in the synchronous mode.

## Patentansprüche

1. Industriesystem (1), das Folgendes umfasst:
ein Netzwerk (2) und zwei oder mehr Industriemaschinen (20), die über das Netzwerk (2) verbunden sind, wobei die Industriemaschinen (20) dazu konfiguriert sind, Bewegungen durchzuführen, die miteinander synchronisiert sind, durch Durchführen der Bewegungen basierend auf einer Zeit, die von dem Netzwerk (2) erhoben wird, in dem eine Vielzahl von Knoten (10) zeitlich synchronisiert ist, wobei die Vielzahl von Knoten (10) Vorrichtungen beinhaltet, die durch das Netzwerk (2) miteinander verbunden sind, wobei
eine erste Industriemaschine (20), die in den zwei oder mehr Industriemaschinen (20) beinhaltet ist, Folgendes beinhaltet:
eine Erhebungseinheit (111), die dazu konfiguriert ist, Masterinformationen über einen Zeitmaster zu erheben, der eine Erzeugungsquelle der Zeit ist;
eine Umschalteinheit (117), die dazu konfiguriert ist, einen Steuermodus, der einen Grad der Synchronisierung gemäß den Masterinformationen angibt, umzuschalten; und
eine Erfassungseinheit (115), die dazu konfiguriert ist, das Umschalten des Zeitmasters basierend auf den von der Erhebungseinheit (111) erhobenen Masterinformationen zu erfassen; wobei
die Umschalteinheit (117) weiter dazu konfiguriert ist, bei Erfassen des Umschaltens des Zeitmasters den Steuermodus von einem Synchronmodus, in dem die zwei oder mehr Industriemaschinen (20) synchronisiert sind, in einen Sicherheitsmodus umzuschalten, wobei eine Differenz zwischen einer Zeit, die von einer zweiten Industriemaschine (20), die in den zwei oder mehr Industriemaschinen (20) beinhaltet ist, erhoben wird, und einer Zeit, die von der ersten Industriemaschine (20) erhoben wird, größer ist als die in dem Synchronmodus.

2. Industriesystem (1) nach Anspruch 1, wobei
die erste Industriemaschine (20) weiter eine Differenzbestätigungseinheit (116) beinhaltet, die dazu konfiguriert ist, bei Erfassen des Umschaltens des Zeitmasters die Differenz zwischen der von der zweiten Industriemaschine (20) erfassten Zeit und der von der ersten Industriemaschine (20) erfassten Zeit zu bestätigen, und
die Umschalteinheit (117) weiter dazu konfiguriert ist, bei Bestätigen einer Differenz durch die Differenzbestätigungseinheit (116) von dem Synchronmodus in den Sicherheitsmodus umzuschalten.

3. Industriesystem (1) nach Anspruch 1 oder 2, wobei
die erste Industriemaschine (20) weiter eine Benachrichtigungseinheit (118) beinhaltet, die dazu konfiguriert ist, wenn die Umschalteinheit (117) den Steuermodus von dem Synchronmodus in den Sicherheitsmodus umschaltet, eine zweite Industriemaschine (20), die in den zwei oder mehr Industriemaschinen (20) beinhaltet ist, zu benachrichtigen, und
die zweite Industriemaschine (20) eine Umschalteinheit (117) beinhaltet, die dazu konfiguriert ist, wenn die zweite Industriemaschine (20) die Benachrichtigung erhebt, einen Steuermodus in der zweiten Industriemaschine (20) von dem Synchronmodus in den Sicherheitsmodus umzuschalten.

4. Industriesystem (1) nach einem der Ansprüche 1 bis 3, wobei die erste Industriemaschine (20) weiter dazu konfiguriert ist, in dem Sicherheitsmodus die miteinander synchronisierten Bewegungen mit reduzierter Geschwindigkeit fortzusetzen.

5. Industriesystem (1) nach einem der Ansprüche 1 bis 4, wobei die erste Industriemaschine (20) weiter dazu konfiguriert ist, in dem Sicherheitsmodus Bewegungen, bei denen die zwei oder mehr Industriemaschinen (20) nicht miteinander synchronisiert sind, durchzuführen, die sich von den miteinander synchronisierten Bewegungen unterscheiden.

6. Industriesystem (1) nach einem der Ansprüche 2 bis 5, wobei
die Differenzbestätigungseinheit (116) weiter dazu konfiguriert ist, eine Größe der Differenz zu bestätigen, und
die erste Industriemaschine (20) weiter dazu konfiguriert ist, in dem Sicherheitsmodus:
die miteinander synchronisierten Bewegungen mit einer verringerten Geschwindigkeit fortzusetzen, wenn die Differenz kleiner als ein vorbestimmter Wert ist; und
Bewegungen durchzuführen, die nicht miteinander synchronisiert sind, oder das Ausführen von Bewegungen zu stoppen, wenn die Differenz größer als der vorbestimmte Wert ist.

7. Industriesystem (1) nach einem der Ansprüche 1 bis 6, wobei
der Steuermodus Folgendes beinhaltet:
einen Asynchronmodus, in dem die zwei oder mehr Industriemaschinen (20) nicht miteinander synchronisiert sind; und
einen Synchronmodus, in dem die zwei oder mehr Industriemaschinen (20) miteinander synchronisiert sind, der nach dem Asynchronmodus durchgeführt wird,
die erste Industriemaschine (20) weiter eine Differenzbestätigungseinheit (116) beinhaltet, die dazu konfiguriert ist, wenn das Umschalten des Zeitmasters von der Erfassungseinheit (115) während einer Periode erfasst wird, in der der Steuermodus der Asynchronmodus ist, zu bestätigen, ob eine Differenz zwischen einer Zeit, die von einer zweiten Industriemaschine (20) erhoben wird, die in den zwei oder mehr Industriemaschinen (20) beinhaltet ist, und einer Zeit, die von der ersten Industriemaschine (20) erhoben wird, aufgetreten ist, und
die Umschalteinheit (117) weiter dazu konfiguriert ist, den Steuermodus von dem Asynchronmodus in den Synchronmodus umzuschalten, wenn die Differenzbestätigungseinheit (116) bestätigt, dass keine Differenz aufgetreten ist.

8. Industriesystem (1) nach einem der Ansprüche 1 bis 7, wobei
die erste Industriemaschine (20) weiter eine Kontinuitätsbestätigungseinheit (119) beinhaltet, die dazu konfiguriert ist, wenn das Umschalten des Zeitmasters von der Erfassungseinheit (115) erfasst wird, Kontinuität einer Zeit vor und einer Zeit nach dem Umschalten des Zeitmasters zu bestätigen, und
die Umschalteinheit (117) weiter dazu konfiguriert ist, den Steuermodus von dem Synchronmodus in den Sicherheitsmodus umzuschalten, wenn die Kontinuitätsbestätigungseinheit (119) die Kontinuität nicht bestätigen kann.

9. Industriesystem (1) nach einem der Ansprüche 1 bis 8, wobei
die Vielzahl von Knoten (10) eine Boundary Clock beinhaltet, und
die Erhebungseinheit (111) weiter dazu konfiguriert ist, die Zeit und die Masterinformationen von der Boundary Clock zu erheben.

10. Industriesystem (1) nach einem der Ansprüche 1 bis 9, wobei die erste Industriemaschine (20) weiter dazu konfiguriert ist, synchrone Kommunikation basierend auf einer von einem Netzwerk (2) erhobenen Zeit durchzuführen.

11. Verfahren zum Steuern des Industriesystems nach Anspruch 1, wobei das Verfahren Folgendes umfasst:
Durchführen einer Bewegung, die mit einer anderen Bewegung in einer anderen Industriemaschine (20) synchronisiert ist, basierend auf einer Zeit, die von dem Netzwerk (2) erhoben wird, in dem eine Vielzahl von Knoten (10) zeitlich synchronisiert ist;
Erheben von Masterinformationen über einen Zeitmaster, der eine Erzeugungsquelle der Zeit ist;
Erfassen des Umschaltens des Zeitmasters basierend auf den Masterinformationen;
Umschalten eines Steuermodus, der einen Grad der Synchronisierung gemäß den Masterinformationen angibt; wobei
wenn das Umschalten des Zeitmasters erfasst wird, der Steuermodus von einem Synchronmodus, in dem die zwei oder mehr Industriemaschinen (20) synchronisiert sind, in einen Sicherheitsmodus umgeschaltet wird, wobei eine Differenz zwischen einer Zeit, von einer zweiten Industriemaschine (20), die in den zwei oder mehr Industriemaschinen (20) beinhaltet ist, erhoben wird, und einer Zeit, die von der ersten Industriemaschine (20) erhoben wird, größer ist als die in dem Synchronmodus.

## Revendications

1. Système industriel (1), comprenant :
un réseau (2) et deux ou plus machines industrielles (20) raccordées par l'intermédiaire du réseau (2), dans lequel les machines industrielles (20) sont configurées pour réaliser des mouvements synchronisés les unes avec les autres en réalisant les mouvements sur la base d'un temps acquis à partir du réseau (2) dans lequel une pluralité de nœuds (10) sont synchronisés dans le temps, la pluralité de nœuds (10) incluant des dispositifs interconnectés par le réseau (2), dans lequel
une première machine industrielle (20) incluse dans les deux ou plus machines industrielles (20) inclut :
une unité d'acquisition (111) configurée pour acquérir des informations maître sur un maître de temps étant une source de génération du temps ;
une unité de commutation (117) configurée pour commuter un mode de commande indiquant un degré de synchronisation conformément aux informations maître ; et
une unité de détection (115) configurée pour détecter la commutation du maître de temps sur la base des informations maître acquises par l'unité d'acquisition (111) ; dans lequel
l'unité de commutation (117) est en outre configurée pour commuter, lorsque la commutation du maître de temps est détectée, le mode de commande d'un mode synchrone dans lequel les deux ou plus machines industrielles (20) sont synchronisées à un mode de sécurité dans lequel une différence entre un temps acquis par une seconde machine industrielle (20) incluse dans les deux ou plus machines industrielles (20) et un temps acquis par la première machine industrielle (20) est plus grande que celle dans le mode synchrone.

2. Système industriel (1) selon la revendication 1, dans lequel
la première machine industrielle (20) inclut en outre une unité de confirmation de différence (116) configurée pour confirmer, lorsque la commutation du maître de temps est détectée, la différence entre le temps acquis par la seconde machine industrielle (20) et le temps acquis par la première machine industrielle (20), et
l'unité de commutation (117) est en outre configurée pour commuter, lorsqu'une différence est confirmée par l'unité de confirmation de différence (116), du mode synchrone au mode de sécurité.

3. Système industriel (1) selon la revendication 1 ou 2, dans lequel
la première machine industrielle (20) inclut en outre une unité de notification (118) configurée pour notifier, lorsque l'unité de commutation (117) commute le mode de commande du mode synchrone au mode de sécurité, une seconde machine industrielle (20) incluse dans les deux ou plus machines industrielles (20), et
la seconde machine industrielle (20) inclut une unité de commutation (117) configurée pour commuter, lorsque la seconde machine industrielle (20) acquiert la notification, un mode de commande dans la seconde machine industrielle (20) du mode synchrone au mode de sécurité.

4. Système industriel (1) selon l'une quelconque des revendications 1 à 3, dans lequel la première machine industrielle (20) est en outre configurée pour poursuivre, dans le mode de sécurité, les mouvements synchronisés les uns avec les autres à une vitesse réduite.

5. Système industriel (1) selon l'une quelconque des revendications 1 à 4, dans lequel la première machine industrielle (20) est en outre configurée pour réaliser, dans le mode de sécurité, des mouvements dans lesquels les deux ou plus machines industrielles (20) ne sont pas synchronisées les unes avec les autres, différents des mouvements synchronisés les uns avec les autres.

6. Système industriel (1) selon l'une quelconque des revendications 2 à 5, dans lequel
l'unité de confirmation de différence (116) est en outre configurée pour confirmer une grandeur de la différence, et
la première machine industrielle (20) est en outre configurée pour, dans le mode de sécurité :
poursuivre les mouvements synchronisés les uns avec les autres à une vitesse réduite lorsque la différence est plus petite qu'un niveau prédéterminé ; et
réaliser des mouvements qui ne sont pas synchronisés les uns avec les autres ou arrêter l'exécution des mouvements lorsque la différence est plus grande que le niveau prédéterminé.

7. Système industriel (1) selon l'une quelconque des revendications 1 à 6, dans lequel
le mode de commande inclut :
un mode asynchrone dans lequel les deux ou plus machines industrielles (20) ne sont pas synchronisées les unes avec les autres ; et
un mode synchrone dans lequel les deux ou plus machines industrielles (20) sont synchronisées les unes avec les autres, réalisé après le mode asynchrone,
la première machine industrielle (20) inclut en outre une unité de confirmation de différence (116) configurée pour confirmer, lorsque la commutation du maître de temps est détectée par l'unité de détection (115) pendant une période dans laquelle le mode de commande est le mode asynchrone, si une différence s'est produite ou non entre un temps acquis par une seconde machine industrielle (20) incluse dans les deux ou plus machines industrielles (20) et un temps acquis par la première machine industrielle (20), et
l'unité de commutation (117) est en outre configurée pour commuter, lorsque l'unité de confirmation de différence (116) confirme qu'aucune différence ne s'est produite, le mode de commande du mode asynchrone au mode synchrone.

8. Système industriel (1) selon l'une quelconque des revendications 1 à 7, dans lequel
la première machine industrielle (20) inclut en outre une unité de confirmation de continuité (119) configurée pour confirmer, lorsque la commutation du maître de temps est détectée par l'unité de détection (115), une continuité d'un temps avant et d'un temps après la commutation du maître de temps, et
l'unité de commutation (117) est en outre configurée pour commuter, lorsque l'unité de confirmation de continuité (119) ne peut pas confirmer la continuité, le mode de commande du mode synchrone au mode de sécurité.

9. Système industriel (1) selon l'une quelconque des revendications 1 à 8, dans lequel
la pluralité de nœuds (10) inclut une horloge limite, et
l'unité d'acquisition (111) est en outre configurée pour acquérir le temps et les informations de maître à partir de l'horloge limite.

10. Système industriel (1) selon l'une quelconque des revendications 1 à 9, dans lequel la première machine industrielle (20) est en outre configurée pour réaliser une communication synchrone sur la base d'un temps acquis à partir d'un réseau (2).

11. Procédé de commande du système industriel selon la revendication 1, le procédé comprenant :
la réalisation d'un mouvement synchronisé avec un autre mouvement dans une autre machine industrielle (20) sur la base d'un temps acquis à partir du réseau (2) dans lequel une pluralité de nœuds (10) sont synchronisés dans le temps ;
l'obtention d'informations maître sur un maître de temps étant une source de génération du temps ;
la détection de la commutation du maître de temps sur la base des informations maître ;
la commutation d'un mode de commande indiquant un degré de synchronisation conformément aux informations maître ; dans lequel
lorsque la commutation du maître de temps est détectée, le mode de commande est commuté d'un mode synchrone d'un mode synchrone dans lequel les deux ou plus machines industrielles (20) sont synchronisées à un mode de sécurité dans lequel une différence entre un temps acquis par une seconde machine industrielle (20) incluse dans les deux ou plus machines industrielles (20) et un temps acquis par la première machine industrielle (20) est plus grande que celle dans le mode synchrone.
